# EUROPEAN PATENT SPECIFICATION

(11) **EP 4 350 889 B1**
(45) Date of publication and mention of the grant of the patent: **04.11.2026**
(21) Application number: 21943774.6
(22) Date of filing: 02.09.2021
(51) Int. Cl.: H01Q 3/32, H01P 1/18

(54) **SWITCHABLE BEAM PHASE SHIFTER AND ANTENNA**
SCHALTBARER STRAHLPHASENSCHIEBER UND ANTENNE
DÉPHASEUR DE FAISCEAU COMMUTABLE ET ANTENNE

(30) Priority: 31.05.2021 CN 202110600300
(43) Date of publication of application: 10.04.2024
(73) Proprietor: CICT Mobile Communication Technology Co., Ltd., Canglong Island, Jiangxia District Wuhan, Hubei 430205 (CN)
(72) Inventor: WANG, Zhenyu, Wuhan Hubei 430205 (CN); JIANG, Liangbin, Wuhan Hubei 430205 (CN); YAO, Chi, Wuhan Hubei 430205 (CN); XIONG, Siyi, Wuhan Hubei 430205 (CN); YANG, Yaoting, Wuhan Hubei 430205 (CN); SUN, Yanming, Wuhan Hubei 430205 (CN); WU, Weihua, Wuhan Hubei 430205 (CN)
(74) Representative: Studio Torta S.p.A.
(86) International application number: PCT/CN2021/116240
(87) International publication number: WO 2022/252420

(56) References cited:
- EP-B1- 2 083 477
- WO-A1-2013/013565
- WO-A1-2017/036339
- CN-A- 101 587 989
- CN-A- 102 005 629
- CN-A- 109 193 161
- CN-A- 109 616 722
- CN-A- 110 707 398
- CN-U- 202 564 505
- CN-U- 202 564 505
- CN-U- 208 939 144

## Description

### CROSS-REFERENCE TO RELATED APPLICATION

The present application claims priority to Chinese patent application No. 202110600300.3 filed on May 31, 2021, entitled "Switchable Beam Phase Shifter and Antenna".

### FIELD

The present application relates to the field of antenna, in particular to a beam-switchable phase shifter and an antenna.

### BACKGROUND

With rapid development of mobile communication technologies, communication networks have increasingly higher requirements for electrical and mechanical performances of base station antennas. A smart electrical tilt antenna is a base station antenna using an electronic mode to adjust a downtilt angle of a beam. In order to take into account co-channel interference and cell coverage, a vertical pattern of the antenna is usually beamformed. A mode to achieve beamforming is to optimally adjust fed amplitude distributions and phase distributions of each radiation unit. A phase shifter is a key component to achieve this function.

A traditional phase shifter can only adjust an electrical tilt angle of a radiation beam of an antenna, but cannot adjust beamwidth, resulting in limitation in its application scenarios.

EP2083477B1 discloses a phase shifter includes two or more conductive strips, an input line and a wiper coupled to both the input line and the conductive strips. Rotation of the wiper about a pivot point alters the path lengths between the input line and output ports or antenna elements connected to the conductive strips. The wiper is a multi-bladed wiper. Phase errors in multi-bladed wiper-type phase shifters are reduced. Arrangements for reduction of phase shifter size or increase in phase shift range are described.

CN202564505U discloses an electrically adjustable antenna fast/slow wave phase shifter which comprises a slow wave structure arc arm, a fast wave structure arc arm, a feeder line, a center phase output line, and a rotating arm, wherein two output ends of the slow wave structure arc arm and two output ends of the fast wave structure arc arm are respectively connected with antenna radiation units, the rotating arm is arranged above the two arc arms and the feeder line and coupled to a feed source, the center phase output line is connected with the feeder line, and the other end of the center phase output line is connected with a center phase radiation unit. When the rotating arm rotates on the two arc arms, phase difference between two radiation units connected on the slow wave structure arc arm and the center phase radiation unit is two times of the phase difference between two radiation units connected on the fast wave structure arc arm and the center phase radiation unit. The phase shifter disclosed by the utility model has the characteristics of wide range of phase shifting, small size, simple structure and convenient assembly.

CN110707398A provides a phase shift device applied to a base station tunable antenna feed network, and provides a smaller phase shift device to ensure reasonable and reliable arrangement of the feednetwork. The phase shift device comprises a phase shift plate and a rotor, the surface, provided with the circuit board, of the circle center position of the phase shift plate is provided with a rotating sheet which is concentrically matched; the rotating sheet rotates around the circle center; the phase shift plate is a high-frequency circuit board; the surface of a circuit board of the phase shift plate comprises N sections of transmission lines, wherein absolute phases of the transmission lines are in an increasing multiple relation and have the same radian, wherein N is a natural number greater than or equal to 2; the N sections of transmission lines are arranged on an equal-radius circle of the circle center at intervals; two ends of each group of transmission lines respectively comprise an output port, a first central coupling region is arranged in a central region, opposite to the center of a circle, of the surface of a circuit board of the phase-shifting board, and two connecting transmission lines which are different in radial position and extend outwards are further arranged on the periphery of the first central coupling region.

### SUMMARY

The present application provides a beam-switchable phase shifter and an antenna to solve a problem in the related art that a traditional phase shifter cannot adjust beamwidth, as defined in the annexed claims.

The present application provides a beam-switchable phase shifter, including: an arc conductor component and a coupling component, where the coupling component rotates around a center of the arc conductor component, the arc conductor component includes a first arc conductor and a second arc conductor, the first arc conductor and the second arc conductor are arranged in a circle around the center, one of the first arc conductor and the second arc conductor includes a slow wave structure, and two ends of the first arc conductor and two ends of the second arc conductor are provided with output ports; and in case that the coupling component is at a first position, the coupling component is coupled and electrically connected to the first arc conductor, and in case that the coupling component is at a second position, the coupling component is coupled and electrically connected to the second arc conductor.

According to the beam-switchable phase shifter provided by the present application, the arc conductor component further includes a third arc conductor and a fourth arc conductor, where the third arc conductor and the fourth arc conductor are arranged in a circle around the center, a radius of the third arc conductor is smaller than a radius of the first arc conductor, two ends of the third arc conductor and two ends of the fourth arc conductor are provided with output ports, and a structure of the first arc conductor is the same as a structure of the third arc conductor; and in case that the coupling component is at the first position, the coupling component is coupled and electrically connected to the first arc conductor and the third arc conductor, and in case that the coupling component is at the second position, the coupling component is coupled and electrically connected to the second arc conductor and the fourth arc conductor.

According to the beam-switchable phase shifter provided by the present application, in case that there are a plurality of first arc conductors and a plurality of third arc conductors, the plurality of the first arc conductors and the second arc conductor are arranged in a circle around the center, and the plurality of the third arc conductors and the fourth arc conductor are arranged in a circle around the center; and
in case that the coupling component is at the first position, the coupling component is coupled and electrically connected to at least two first arc conductors and at least two third arc conductors.

According to the beam-switchable phase shifter provided by the present application, in case that there are a plurality of first arc conductors, the plurality of the first arc conductors and the second arc conductor are arranged in a circle around the center; and in case that the coupling component is at the first position, the coupling component is coupled and electrically connected to at least two first arc conductors.

According to the beam-switchable phase shifter provided by the present application, the beam-switchable phase shifter further includes a power divider network, where the power divider network includes a first port and a second port, in case that the coupling component is at a third position, the coupling component is coupled and electrically connected to the first port and the second port.

According to the beam-switchable phase shifter provided by the present application, a characteristic impedance of the first arc conductor is equal to a characteristic impedance of the second arc conductor.

According to the beam-switchable phase shifter provided by the present application, the arc conductor component and the coupling component are microstrip structures or stripline structures.

According to the beam-switchable phase shifter provided by the present application, in case that the first arc conductor includes the slow wave structure, a phase shift amount per unit angle of the first arc conductor is greater than a phase shift amount per unit angle of the second arc conductor.

According to the beam-switchable phase shifter provided by the present application, the phase shift amount per unit angle of the first arc conductor is twice of the phase shift amount per unit angle of the second arc conductor.

The present application further provides an antenna, including: a plurality of radiation units and the above-mentioned beam-switchable phase shifter, where the plurality of radiation units are connected to a plurality of output ports in a one-to-one correspondence.

The beam-switchable phase shifter and the antenna provided by the present application are able to achieve a switch between an operating state of broad beam and an operating state of narrow beam through a coupling connection between the coupling component and different arc conductors, which has good impedance matching and high practicality.

### BRIEF DESCRIPTION OF THE DRAWINGS

To provide a clearer description of the solution in the present application, a brief introduction is given to the accompanying drawings required in the description of embodiments of the present application. It is evident that the accompanying drawings in the following description are some embodiments of the present application. For those ordinarily skilled in the art, other accompanying drawings may be obtained based on these drawings without any creative effort.
FIG. 1 is a first structural schematic diagram of a beam-switchable phase shifter according to the present application;
FIG. 2 is a first structural schematic diagram of an antenna according to the present application;
FIG. 3 is a structural schematic diagram of a slow wave structure according to the present application;
FIG. 4 is a second structural schematic diagram of an antenna according to the present application;
FIG. 5 is a third structural schematic diagram of an antenna according to the present application;
FIG. 6 is a fourth structural schematic diagram of an antenna according to the present application; and
FIG. 7 is a second structural schematic diagram of a beam-switchable phase shifter according to the present application. The structural schematic diagrams shown in Figs. 1-6 do not form part of the claimed-subject-matter, however are considered useful for understanding the invention.

### Reference signs:

| | | | |
|---|---|---|---|
| 11: | first arc conductor; | 12: | second arc conductor; |
| 13: | fourth arc conductor; | 14: | third arc conductor; |
| 15: | fifth arc conductor; | 2: | coupling component; |
| 21: | first coupling portion; | 22: | second coupling portion; |
| 23: | third coupling portion; | 24: | fourth coupling portion; |
| 25: | fifth coupling portion. | | |

### DETAILED DESCRIPTION

To make the objective, solution, and advantage of the present application clearer, the following provides a clear and complete description for the solution in the present application in conjunction with the accompanying drawings. It should be noted that the described embodiments are part of the embodiments of the present application, not all of them. Based on the embodiments in the present application, all other embodiments obtained by those ordinarily skilled in the art without creative effort fall within the scope of protection of the present application.

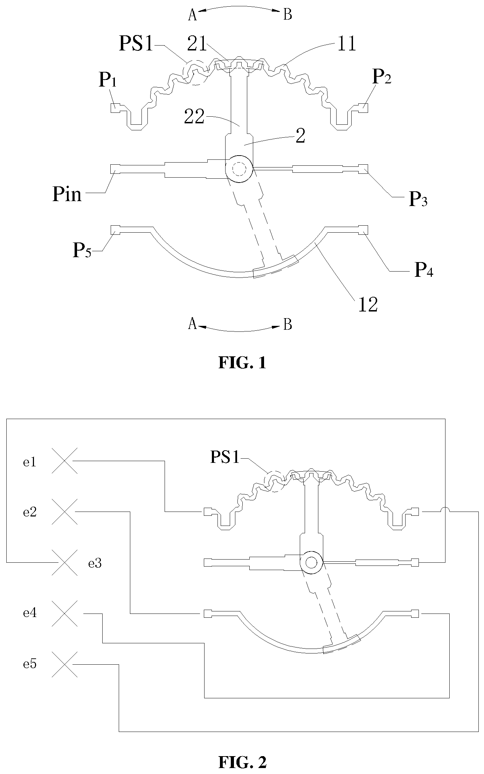

A beam-switchable phase shifter provided by the present application is described below with reference to FIG. 1.

As shown in FIG. 1, the beam-switchable phase shifter provided by an embodiment of the present application includes an arc conductor component and a coupling component 2.

The phase shifter includes an input port Pin. In an embodiment, the phase shifter further includes an output port P3. The P3 port is a port whose phase does not change.

The coupling component 2 rotates around a center of the arc conductor component. The coupling component 2 includes a first coupling portion 21 and a second coupling portion 22 connected to each other. The second coupling portion 22 rotates around the center. The second coupling portion 22 is connected to the input port Pin.

The arc conductor component includes a first arc conductor 11 and a second arc conductor 12. The first arc conductor 11 and the second arc conductor 12 are arranged in a circle around the center. One of the first arc conductor 11 and the second arc conductor 12 includes a slow wave structure. In this embodiment, the first arc conductor 11 including a slow wave structure is taken as an example for description.

Two ends of the first arc conductor 11 and two ends of the second arc conductor 12 are provided with output ports.

In case that the coupling component 2 is at a first position, the first coupling portion 21 is coupled and electrically connected to the first arc conductor 11. In case that the coupling component 2 is at a second position, the first coupling portion 21 is coupled and electrically connected to the second arc conductor 12.

In an embodiment, a characteristic impedance of the first arc conductor 11 is equal to a characteristic impedance of the second arc conductor 12. For example, the characteristic impedance of the first arc conductor 11 and the second arc conductor 12 are both 50 ohms.

In an embodiment, the arc conductor component and the coupling component 2 are both microstrip structures or stripline structures. That is, the first arc conductor 11, the second arc conductor 12, the first coupling portion 21 and the second coupling portion 22 are microstrip structures or stripline structures.

In an embodiment, in case that the first arc conductor 11 includes a slow wave structure, a phase shift amount per unit angle of the first arc conductor 11 is greater than a phase shift amount per unit angle of the second arc conductor 12. For example, the phase shift amount per unit angle of the first arc conductor 11 is twice of the phase shift amount per unit angle of the second arc conductor 12.

It should be noted that in case that the coupling component 2 is at the first position, the first coupling portion 21 is coupled and electrically connected to the first arc conductor 11. After that, the first coupling portion 21 moves from A to B, and then the coupling component 2 is at the second position, and the first coupling portion 21 is coupled and electrically connected to the second arc conductor 12.

In the embodiments of the present application, through a coupling connection between the coupling component and different arc conductors, switching between an operating state of broad beam and an operating state of narrow beam is achieved, which has good impedance matching and high practicability.

The present application further provides an antenna, including: a plurality of radiation units and the beam-switchable phase shifter of the above embodiment. The plurality of radiation units are connected to a plurality of output ports in a one-to-one correspondence.

As shown in FIG. 2, in case that the first coupling portion 21 is at the first position, that is, in case that the first coupling portion 21 is only coupled and electrically connected to the first arc conductor 11, a radiation unit e1, a radiation unit e3 and a radiation unit e5 in an antenna array are in a conductive state, and a radiation unit e2 and a radiation unit e4 are in a non-conductive state. Distances between two adjacent radiation units in the radiation unit e1, the radiation unit e2, the radiation unit e3, the radiation unit e4 and the radiation unit e5 are set to 0.5-1 λ, 0.8 λ, 0.8 λ, 0.8 λ and 0.5-1 λ. That is, a distance between the radiation unit e1 and the radiation unit e2 is 0.5-1 λ, a distance between the radiation unit e2 and the radiation unit e3 is 0.8 λ, and so on. λ is a wavelength in vacuum of a center frequency point of an operating frequency band of the array antenna.

In case that the first coupling portion 21 is only coupled and electrically connected to the first arc conductor 11, a vertical beamwidth of the array antenna including five radiation units is 12 degrees to 15 degrees, and a vertical plane of an antenna beam is in a narrow beam state. When the second coupling portion 22 slides in a direction from B to A, a phase of the radiation unit e1 leads, and a phase of the radiation unit e5 lags.

In case that the first coupling portion 21 is only coupled and electrically connected to the second arc conductor 12, the first coupling portion 21 is at the second position, and the coupling component is shown as a dotted line in FIG. 2. The radiation unit e2, the radiation unit e3 and the radiation unit e4 of the antenna array are in a conductive operating state, and the radiation unit e1 and the radiation unit e5 are in a non-conductive state. The vertical beamwidth of the array antenna including five radiation units is approximately 21 degrees to 24 degrees, and the array antenna is in a broad beam operating state. When the second coupling portion 22 slides in a direction from B to A, a phase of the radiation unit e2 leads, and a phase of the radiation unit e4 lags.

In an embodiment of the present application, a radius of the first arc conductor 11 is the same as a radius of the second arc conductor 12, and the characteristic impedance of the first arc conductor 11 and the characteristic impedance of the second arc conductor 12 are both 50 ohms. Therefore, when the coupling component 2 is coupled with different arc conductors, a power distribution ratio of the narrow beam and the broad beam remains the same, and impedance mismatch will not be caused.

A unit distance of a linear array consisted of the radiation unit e1, the radiation unit e3 and the radiation unit e5 is obviously larger than a unit distance of an array consisted of the radiation unit e2, the radiation unit e3 and the radiation unit e4. In order to achieve a same electrical downtilt angle and miniaturization of a size of the phase shifter, preferably, when the coupling component 2 swings by a unit angle, a phase shift amount of the first arc conductor 11 is greater than a phase shift amount of the second arc conductor 12. The first arc conductor 11 preferably includes a bent linear slow wave structure, and a sub-unit PS1 of the slow wave structure is shown in FIG. 2.

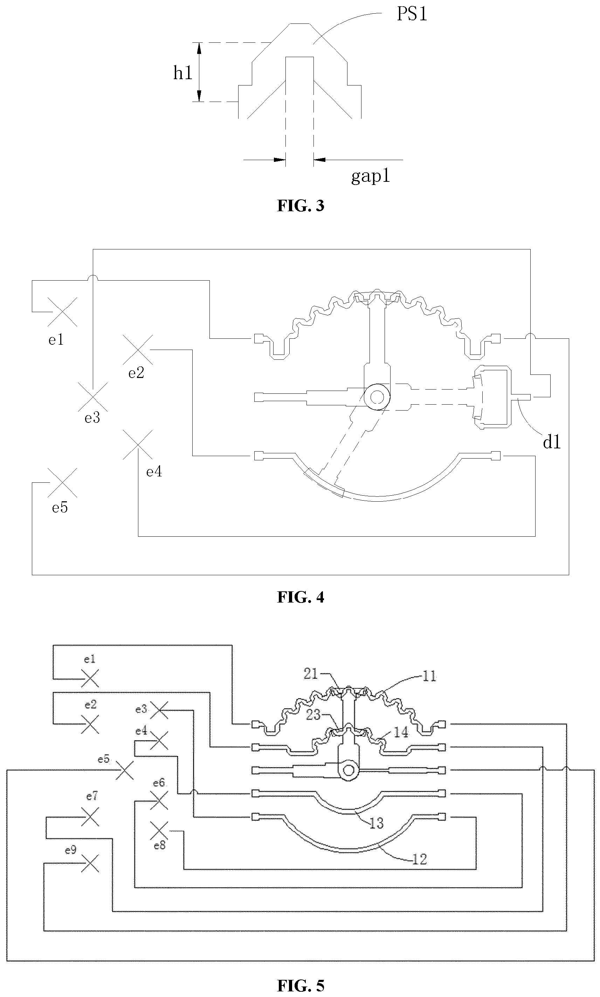

As shown in FIG. 3, a sub-unit of the slow wave structure contains two parameters, one is a unit distance gap1 of the sub-unit, and the other is a height h1 of the sub-unit. In engineering applications, by reducing the gap1, more sub-units PS1 may be accommodated per unit length, and by reducing the gap1 or increasing the height h1, the phase shift amount may be increased.

In an embodiment, as shown in FIG. 4, the phase shifter includes a power division component t1. The power division component includes three ports, namely d1, d2 and d3. The power division component, the first arc conductor 11, the second arc conductor 12 and the input port are DC open circuits.

Correspondingly, the antenna array is a planar array including five radiation units. The radiation unit e1 and the radiation unit e5 form an array and are located at a left column of the radiation unit e3. The radiation unit e2 and the radiation unit e4 form an array and are located at a right column of the radiation unit e3. A distance between the radiation unit e2 and the radiation unit e4 is 0.8 λ, and a distance between the radiation unit e1 and the radiation unit e5 is 1.5 λ.

In an embodiment of the present application, in case that the first coupling portion 21 is coupled and electrically connected to the first arc conductor 11, the radiation unit e1 and the radiation unit e5 in the array are conductive, and the array is in a narrow beam operating state. In case that the first coupling portion 21 is coupled and electrically connected to the second arc conductor 12, the radiation unit e2 and the radiation unit e4 in the array are conductive, and the array is in a medium-width beam operating state.

In case that the first coupling portion 21 swings to a horizontal position, when the first coupling portion 21 is coupled to the port d2 and the port d3 of the power division component, only the radiation unit e3 in the array and the port d1 are conductive, and the array is in a broad beam operating state.

From different operating states, it can be seen that the coupling component of the phase shifter is electrically connected to different arc conductors or power division component, which has good impedance matching, good reflection performance and high practicability.

In an embodiment, as shown in FIG. 5, the arc conductor component further includes a third arc conductor 14 and a fourth arc conductor 13. The third arc conductor 14 and the fourth arc conductor 13 are arranged in a circle around the center. A radius of the third arc conductor 14 is smaller than a radius of the first arc conductor 11, that is, the third arc conductor 14 and the first arc conductor 11 are arranged sequentially along a radial direction.

Two ends of the third arc conductor 14 and two ends of the fourth arc conductor 13 are provided with output ports. The first arc conductor 11 and the third arc conductor 14 include a same structure, that is, both the arc conductor 11 and the third arc conductor 14 include the slow wave structure.

In case that the coupling component 2 is at the first position, the coupling component 2 is coupled and electrically connected to the first arc conductor 11 and the third arc conductor 14. In case that the coupling component 2 is at the second position, the coupling component 2 is coupled and electrically connected to the second arc conductor 12 and the fourth arc conductor 13.

As shown in FIG. 5, the antenna array in the embodiment of the present application includes 9 antenna radiation units, namely e1~e9. The radiation unit e1, the radiation unit e2, the radiation unit e7 and the radiation unit e9 are distributed at a left column of the radiation unit e5, and the radiation unit e3, the radiation unit e4, the radiation unit e6 and the radiation unit e8 are distributed at a right column of the radiation unit e5.

The phase shifter includes four arc conductors, namely the first arc conductor 11, the second arc conductor 12, the fourth arc conductor 13 and the third arc conductor 14. The coupling component includes a first coupling portion 21 and a third coupling portion 23.

In case that the first coupling portion 21 is electrically connected to the first arc conductor 11, and the third coupling portion 23 is electrically connected to the third arc conductor 14, the radiation unit e1, the radiation unit e2, the radiation unit e5, the radiation unit e7 and the radiation unit e9 of the array are conductive, and other radiation units are not conductive, and a radiation beam of the antenna is a broad beam.

In case that the first coupling portion 21 is electrically connected to the second arc conductor 12, and the third coupling portion 23 is electrically connected to the fourth arc conductor 13, the radiation unit e3, the radiation unit e4, the radiation unit e5, the radiation unit e6 and the radiation unit e8 of the array are conductive, and other radiation units are not conductive, and a radiation beam of the antenna is a narrow beam.

In engineering applications, those skilled in the art may obtain phase shift amounts required for each radiation unit based on distances between radiation units and requirements for beamforming. Based on a proportion of the phase shift amounts, adjusting parameters of slow wave structures of arc conductors may optimize to obtain required phase shift amount.

In this embodiment, in the broad beam operating state and the narrow beam operating state, the radiation unit e5 is reused. The radiation unit e1, the radiation unit e2, the radiation unit e7 and the radiation unit e9 are distributed at the left column of the radiation unit e5, the radiation unit e3, the radiation unit e4, the radiation unit e6 and the radiation unit e8 are distributed at the right column of the radiation unit e5, which reduces a length of the antenna. Or, all the radiation units may be distributed in a straight line, which however, may increase the length of the antenna.

In an embodiment, three arc conductors are each provided along the radial direction. When the coupling component swings, the arc conductors are respectively connected to seven radiation units to achieve the broad beam operating state and the narrow beam operating state.

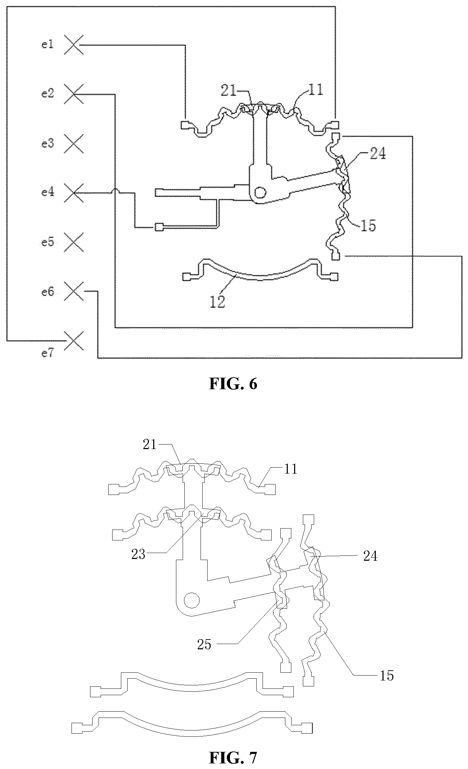

In an embodiment, as shown in FIG. 7, in case that there are a plurality of first arc conductors 11 and a plurality of third arc conductors 14, the plurality of first arc conductors 11 and the second arc conductor 12 are arranged in a circle around the center, the plurality of third arc conductors 14 and the fourth arc conductor 13 are arranged in a circle around the center;

In case that the coupling component 2 is at the first position, the coupling component is coupled and electrically connected to at least two first arc conductors 11 and at least two third arc conductors 14.

In an embodiment of the present application, the phase shifter includes six arc conductors, namely the first arc conductor 11, the second arc conductor 12, the fourth arc conductor 13, the third arc conductor 14, a fifth arc conductor 15 and a sixth arc conductor. The coupling component includes the first coupling portion 21, the third coupling portion 23, a fourth coupling portion 24 and a fifth coupling portion 25. All the first arc conductor 11, the third arc conductor 14, the fifth arc conductor 15 and the sixth arc conductor include the slow wave structures.

In case that the first coupling portion 21 is electrically connected to the first arc conductor 11 and the third coupling portion 23 is electrically connected to the third arc conductor 14, the fifth arc conductor 15 is electrically connected to the fourth coupling portion 24 and the sixth arc conductor is electrically connected to the fifth coupling portion 25.

The arc conductors are divided into three groups, and each group contains one arc conductor. Those skilled in the art may imagine that the number of arc conductors in each group may be increased to two, as shown in FIG. 7. In case that the antenna array includes thirteen radiation units, the radiation units may be arranged in a linear array or in a non-linear array. The number of arc conductors in each group may also be increased to three or more to meet requirements of different numbers of array antennas.

In an embodiment, when there are a plurality of first arc conductors 11, the plurality of first arc conductors 11 and the second arc conductor 12 are arranged in a circle around the center.

In case that the coupling component 2 is at the first position, the coupling component 2 is coupled and electrically connected to at least two first arc conductors 11.

In an embodiment of the present application, as shown in FIG. 6, the phase shifter includes the first arc conductor 11, the fifth arc conductor 15 and the second arc conductor 12. The coupling component 2 includes a port portion as well as the first coupling portion 21 and the fourth coupling portion 24 extending from the port portion. The antenna array contains seven radiation units, namely e1 to e7. One port of the second arc conductor 12 is connected to the radiation unit e5, and another port of the second arc conductor 12 is connected to the radiation unit e3.

In case that the first coupling portion 21 of the coupling component 2 is coupled with the first arc conductor 11 and the fourth coupling portion 24 is coupled with the fifth arc conductor 15, all the radiation unit e1, the radiation unit e2, the radiation unit e6 and the radiation unit e7 are conductive, and other radiation units are not conductive, and then the antenna is in a narrow beam operating state.

In case that the first coupling portion 21 of the coupling component 2 is coupled with the first arc conductor 11 and the fourth coupling portion 24 is coupled with the fifth arc conductor 15, the port portion is electrically connected to the radiation unit e4, and all the radiation unit e1, the radiation unit e2, the radiation unit e4, the radiation unit e6 and the radiation unit e7 are conductive, and other radiation units are not conductive, and then the antenna is in a narrow beam operating state.

In case that the first coupling portion 21 of the coupling component 2 is coupled with the fifth arc conductor 15 and the fourth coupling portion 24 is coupled with the second arc conductor 12, the port portion is electrically connected to the radiation unit e4, and all the radiation unit e2, the radiation unit e3, radiation unit e4, radiation unit e5 and radiation unit e6 are conductive, and other radiation units are not conductive, and then the antenna is in a narrow beam operating state.

In an embodiment, there are two groups of arc conductors provided on two sides of the center, and each group contains two arc conductors. It is conceivable that each group contains three or more arc conductors.

The antenna provided by the present application is electrically coupled with different arc conductor components through the coupling component, thereby realizing electrical connection between different radiation units and the phase shifter, forming an electrical tilt array antenna including radiation units with different distances, achieving an adjustable vertical plane beamwidth, and solving a problem of network coverage.

The embodiments described above are only illustrative. The units described as separate components may or may not be physically separated. The components shown as units may or may not be physical units, that is, they may be in same location, or it can be distributed across a plurality of network units. Some or all of the modules may be selected based on actual needs to achieve the objective of the solution of the embodiments. Persons of ordinary skill in the art may understand and implement it without any creative effort.

Finally, it should be noted that the above embodiments are only used to illustrate the solution of the present application, not to limit it. Although the present application is described in detail with reference to the aforementioned embodiments, those ordinarily skilled in the art should understand that the solution recorded in the aforementioned embodiments may still be modified within the scope of the appended claims.

## Claims

1. A beam-switchable phase shifter, comprising: an arc conductor component and a coupling component (2), wherein the coupling component (2) is configured to rotate around a center of the arc conductor component, the arc conductor component comprises a first arc conductor (11) and a second arc conductor (12), the first arc conductor (11) and the second arc conductor (12) are arranged in a circle around the center, one of the first arc conductor (11) and the second arc conductor (12) comprises a slow wave structure, and two ends of the first arc conductor (11) and two ends of the second arc conductor (12) are provided with output ports;
wherein the arc conductor component further comprises a third arc conductor (14) and a fourth arc conductor (13), wherein the third arc conductor (14) and the fourth arc conductor (13) are arranged in a circle around the center, a radius of the third arc conductor (14) is smaller than a radius of the first arc conductor (11), two ends of the third arc conductor (14) and two ends of the fourth arc conductor (13) are provided with output ports, and a structure of the first arc conductor (11) is the same as a structure of the third arc conductor (14); and
in case that the coupling component (2) is at the first position, the coupling component (2) is coupled and electrically connected to the first arc conductor (11) and the third arc conductor (14), and in case that the coupling component (2) is at the second position, the coupling component (2) is coupled and electrically connected to the second arc conductor (12) and the fourth arc conductor (13),
**characterized in that** the arc conductor component further comprises another one of the first arc conductor such that the first arc conductor and the other one of the first arc conductor form a plurality of first arc conductors (11), wherein the arc conductor component further comprises another one of the third arc conductor such that the third arc conductor and the other one of the third arc conductor form a a plurality of third arc conductors (14), the plurality of the first arc conductors (11) and the second arc conductor (12) are arranged in a circle around the center, and the plurality of the third arc conductors (14) and the fourth arc conductor (13) are arranged in a circle around the center; and
in case that the coupling component (2) is at the first position, the coupling component (2) is coupled and electrically connected to at least two first arc conductors (11) and at least two third arc conductors (14).

2. The beam-switchable phase shifter of claim 1, wherein the beam-switchable phase shifter further comprises a power divider network, wherein the power divider network comprises a first port and a second port, in case that the coupling component (2) is at a third position, the coupling component (2) is coupled and electrically connected to the first port and the second port.

3. The beam-switchable phase shifter of claim 1 or 2, wherein a characteristic impedance of the first arc conductor (11) is equal to a characteristic impedance of the second arc conductor (12).

4. The beam-switchable phase shifter of claim 1 or 2, wherein the arc conductor component and the coupling component (2) are microstrip structures or stripline structures.

5. The beam-switchable phase shifter of claim 1 or 2, wherein in case that the first arc conductor (11) comprises the slow wave structure, a phase shift amount per unit angle of the first arc conductor (11) is greater than a phase shift amount per unit angle of the second arc conductor (12).

6. The beam-switchable phase shifter of claim 5, wherein the phase shift amount per unit angle of the first arc conductor (11) is twice of the phase shift amount per unit angle of the second arc conductor (12).

7. An antenna, comprising: a plurality of radiation units and a beam-switchable phase shifter of any one of claims 1 to 6, wherein the plurality of radiation units are connected to a plurality of output ports in a one-to-one correspondence.

## Patentansprüche

1. Strahlumschaltbarer Phasenschieber, umfassend: eine Lichtbogenleiterkomponente und eine Kopplungskomponente (2), wobei die Kopplungskomponente (2) so ausgelegt ist, dass sie sich um einen Mittelpunkt der Lichtbogenleiterkomponente dreht, wobei die Lichtbogenleiterkomponente einen ersten Lichtbogenleiter (11) und einen zweiten Lichtbogenleiter (12) umfasst, der erste Lichtbogenleiter (11) und der zweite Lichtbogenleiter (12) kreisförmig um den Mittelpunkt angeordnet sind, einer der beiden Lichtbogenleiter - der erste Lichtbogenleiter (11) oder der zweite Lichtbogenleiter (12) - eine Langwellen-Struktur aufweist und zwei Enden des ersten Lichtbogenleiters (11) sowie zwei Enden des zweiten Lichtbogenleiters (12) mit Ausgangsanschlüssen versehen sind;
wobei die Lichtbogenleiterkomponente ferner einen dritten Lichtbogenleiter (14) und einen vierten Lichtbogenleiter (13) umfasst, wobei der dritte Lichtbogenleiter (14) und der vierte Lichtbogenleiter (13) kreisförmig um den Mittelpunkt angeordnet sind, der Radius des dritten Lichtbogenleiters (14) kleiner als der Radius des ersten Lichtbogenleiters (11) ist, wobei zwei Enden des dritten Lichtbogenleiters (14) und zwei Enden des vierten Lichtbogenleiters (13) mit Ausgangsanschlüssen bereitgestellt sind und der erste Lichtbogenleiter (11) denselben Aufbau wie der dritte Lichtbogenleiter (14) aufweist; und
im Fall, dass sich die Kopplungskomponente (2) in der ersten Position befindet, ist die Kopplungskomponente (2) mit dem ersten Lichtbogenleiter (11) und dem dritten Lichtbogenleiter (14) verbunden und elektrisch verbunden, und im Fall, dass sich die Kopplungskomponente (2) in der zweiten Position befindet, ist die Kopplungskomponente (2) mit dem zweiten Lichtbogenleiter (12) und dem vierten Lichtbogenleiter (13) verbunden und elektrisch verbunden,
**dadurch gekennzeichnet, dass** die Lichtbogenleiterkomponente ferner einen weiteren der ersten Lichtbogenleiter umfasst, sodass der erste Lichtbogenleiter und der weitere der ersten Lichtbogenleiter eine Vielzahl von ersten Lichtbogenleitern (11) bilden, wobei die Lichtbogenleiterkomponente ferner einen weiteren des dritten Lichtbogenleiters umfasst, sodass der dritte Lichtbogenleiter und der weitere des dritten Lichtbogenleiters eine Vielzahl von dritten Lichtbogenleitern (14) bilden, die mehreren ersten Lichtbogenleiter (11) und der zweite Lichtbogenleiter (12) kreisförmig um den Mittelpunkt angeordnet sind und die mehreren dritten Lichtbogenleiter (14) und der vierte Lichtbogenleiter (13) kreisförmig um den Mittelpunkt angeordnet sind; und
im Fall, dass sich das Kopplungselement (2) in der ersten Position befindet, ist das Kopplungselement (2) mit mindestens zwei ersten Lichtbogenleitern (11) und mindestens zwei dritten Lichtbogenleitern (14) verbunden und elektrisch verbunden.

2. Strahlumschaltbarer Phasenschieber nach Anspruch 1, wobei der strahlumschaltbare Phasenschieber ferner ein Leistungsteilernetzwerk umfasst, wobei das Leistungsteilernetzwerk einen ersten Anschluss und einen zweiten Anschluss umfasst, und wobei, falls sich die Kopplungskomponente (2) in einer dritten Position befindet, die Kopplungskomponente (2) mit dem ersten Anschluss und dem zweiten Anschluss gekoppelt und elektrisch verbunden ist.

3. Strahlumschaltbarer Phasenschieber nach Anspruch 1 oder 2, wobei eine charakteristische Impedanz des ersten Bogenleiters (11) gleich einer charakteristischen Impedanz des zweiten Bogenleiters (12) ist.

4. Strahlumschaltbarer Phasenschieber nach Anspruch 1 oder 2, wobei die Lichtbogenleiterkomponente und die Kopplungskomponente (2) Mikrostreifenstrukturen oder Streifenleiterstrukturen sind.

5. Strahlumschaltbarer Phasenschieber nach Anspruch 1 oder 2, wobei in dem Fall, dass der erste Lichtbogenleiter (11) die Langwellenstruktur umfasst, ein Phasenverschiebungsbetrag pro Winkelelement des ersten Lichtbogenleiters (11) größer ist als ein Phasenverschiebungsbetrag pro Winkelelement des zweiten Bogenleiters (12).

6. Strahlumschaltbarer Phasenschieber nach Anspruch 5, wobei der Phasenverschiebungsbetrag pro Winkelelement des ersten Bogenleiters (11) doppelt so groß ist wie der Phasenverschiebungsbetrag pro Winkelelement des zweiten Bogenleiters (12).

7. Antenne, umfassend: eine Vielzahl von Strahlungseinheiten und einen strahlumschaltbaren Phasenschieber nach einem der Ansprüche 1 bis 6, wobei die Vielzahl von Strahlungseinheiten in einer Eins-zu-Eins-Entsprechung mit einer Vielzahl von Ausgangsanschlüssen verbunden ist.

## Revendications

1. Déphaseur à commutation de faisceau, comprenant : un composant conducteur d'arc et un composant de couplage (2), le composant de couplage (2) étant configuré pour tourner autour d'un centre du composant conducteur d'arc, le composant conducteur d'arc comprenant un premier conducteur d'arc (11) et un deuxième conducteur d'arc (12), le premier conducteur d'arc (11) et le deuxième conducteur d'arc (12) étant disposés en cercle autour du centre, l'un parmi le premier conducteur d'arc (11) et le deuxième conducteur d'arc (12) comprenant une structure à onde lente, et deux extrémités du premier conducteur d'arc (11) ainsi que deux extrémités du deuxième conducteur d'arc (12) étant pourvues d'orifices de sortie ;
le composant conducteur d'arc comprenant en outre un troisième conducteur d'arc (14) et un quatrième conducteur d'arc (13), le troisième conducteur d'arc (14) et le quatrième conducteur d'arc (13) étant disposés en cercle autour du centre, le rayon du troisième conducteur d'arc (14) étant inférieur au rayon du premier conducteur d'arc (11), deux extrémités du troisième conducteur d'arc (14) et deux extrémités du quatrième conducteur d'arc (13) étant pourvues d'orifices de sortie, et la structure du premier conducteur d'arc (11) étant identique à celle du troisième conducteur d'arc (14) ; et
dans le cas où le composant de couplage (2) se trouve dans la première position, le composant de couplage (2) est couplé et relié électriquement au premier conducteur d'arc (11) et au troisième conducteur d'arc (14), et lorsque le composant de couplage (2) se trouve dans la deuxième position, le composant de couplage (2) est couplé et relié électriquement au deuxième conducteur d'arc (12) et au quatrième conducteur d'arc (13),
**caractérisé en ce que** le composant conducteur d'arc comprend en outre un autre conducteur d'arc du premier conducteur d'arc, de sorte que le premier conducteur d'arc et l'autre conducteur d'arc du premier conducteur d'arc forment une pluralité de premiers conducteurs d'arc (11), le composant conducteur d'arc comprenant en outre un autre conducteur d'arc du troisième conducteur d'arc, de sorte que le troisième conducteur d'arc et l'autre conducteur d'arc du troisième conducteur d'arc forment une pluralité de troisièmes conducteurs d'arc (14), la pluralité de premiers conducteurs d'arc (11) et le deuxième conducteur d'arc (12) sont disposés en cercle autour du centre, et la pluralité de troisièmes conducteurs d'arc (14) et le quatrième conducteur d'arc (13) sont disposés en cercle autour du centre ; et
dans le cas où le composant de couplage (2) se trouve dans la première position, le composant de couplage (2) est couplé et relié électriquement à au moins deux premiers conducteurs d'arc (11) et à au moins deux troisièmes conducteurs d'arc (14).

2. Déphaseur à commutation de faisceau selon la revendication 1, le déphaseur à commutation de faisceau comprenant en outre un réseau diviseur de puissance, le réseau diviseur de puissance comprenant un premier port et un second port, dans le cas où le composant de couplage (2) se trouve dans une troisième position, le composant de couplage (2) étant couplé et relié électriquement au premier port et au second port.

3. Déphaseur à commutation de faisceau selon la revendication 1 ou 2, l'impédance caractéristique du premier conducteur d'arc (11) étant égale à l'impédance caractéristique du deuxième conducteur d'arc (12).

4. Déphaseur à commutation de faisceau selon la revendication 1 ou 2, le composant conducteur d'arc et le composant de couplage (2) étant des structures microrubans ou des structures stripline.

5. Déphaseur à commutation de faisceau selon la revendication 1 ou 2, dans lequel, dans le cas où le premier conducteur d'arc (11) comprend la structure à onde lente, la quantité de déphasage par unité d'angle du premier conducteur d'arc (11) est supérieure à la quantité de déphasage par unité d'angle du deuxième conducteur d'arc (12).

6. Déphaseur à commutation de faisceau selon la revendication 5, la quantité de déphasage par unité d'angle du premier conducteur d'arc (11) étant le double de la quantité de déphasage par unité d'angle du deuxième conducteur d'arc (12).

7. Antenne, comprenant : une pluralité d'unités de rayonnement et un déphaseur à commutation de faisceau selon l'une quelconque des revendications 1 à 6, la pluralité d'unités de rayonnement étant reliée à une pluralité de ports de sortie selon une correspondance biunivoque.
